# EUROPEAN PATENT APPLICATION

(11) **EP 4 206 776 A1**
(43) Date of publication of application: **05.07.2023**
(21) Application number: 22216300.8
(22) Date of filing: 23.12.2022
(51) Int. Cl.: G02B 6/44

(54) **RIBBED AND GROOVED SHEATH FOR OPTICAL FIBER CABLE**

(30) Priority: 30.12.2021 IN 202111061736
(71) Applicant: Sterlite Technologies Limited, 122002 Gurugram, Haryana (IN)
(72) Inventor: Singh, Sourabh, 122002 Gurugram (IN); Singh, Kawarpreet, 122002 Gurugram (IN)
(74) Representative: Petraz, Gilberto Luigi

(57) **Abstract**

The present disclosure relates to a ribbed and grooved sheath for optical fiber cables having one or more optical transmission elements (118) and a sheath (102) surrounding one or more optical transmission elements (118). Particularly, the outer surface of the sheath (102) has a plurality of ribs (104, 106, 108) and a plurality of grooves (110, 112) such that at least one groove has unequal groove width and/or at least one rib has unequal rib width. Moreover, the plurality of ribs (104, 106, 108) is continuous and parallel on the outer surface. Alternatively, the plurality of ribs (104, 106, 108) is discontinuous.

## Description

### TECHNICAL FIELD

Embodiments of the present invention relate to the field of telecommunications optical cables, and more particularly, relates to a ribbed and grooved sheath for optical fibre cables having improved blowing performance.

This application claims the benefit of Indian Application No. 202111061736 titled "Ribbed and Grooved Sheath" filed by the applicant on 30/12/2021, which is incorporated herein by reference in its entirety.

### BACKGROUND ART

The use of voice and data networks has greatly increased as the number of personal computing and communication devices, such as laptop computers, mobile telephones, Smartphones, tablets, et cetera, has grown. The astronomically increasing number of personal mobile communication devices has concurrently increased the amount of data being transmitted over the networks providing infrastructure for these mobile communication devices.

Optical fiber cables are a critical component of a modern communications network across the globe. To meet the increasing data and bandwidth demands, the installation of optical fiber cables at a rapid pace becomes essential. Currently, an optical fiber used for an optical fiber communication system adopts a structure in which an outer periphery of a core is surrounded by a clad, and an optical signal propagates in this core to transmit information. As the amount of information to be transmitted increases, the optical fiber communication system uses several tens to several hundreds of multiple optical fibers to perform long-distance optical communication of large capacity.

The usual process for manufacturing a communications cable for distance installation varies widely but usually consists of extruding plastic core tubes around fibers, helically wrapping the tubes around a central strength member, building up several layers of protective sheathing, surrounding the sheathing with armour such as steel, and surrounding the armor with a heavy polymer jacket. In particular, the optical fiber cables for telecommunications applications are installed in ducts, wherein the installation of the optical fiber cables in the ducts is mostly performed using a blowing method. The blowing method enables the installation of the optical fiber cables using pressurized air combined with an additional mechanical pushing force such as hydrostatic forces and viscous forces.

Optical fiber and optical cable are installed in the existing duct by viscous fluid resistance effect. The optical fiber or cable is thin and light enough and the duct is close enough in size to the fiber or cable so that gas, such as air, is drawn in the direction in which the fiber or cable is pulled. Bypassing through the duct, it is possible to generate a considerable force in the direction of pulling the fiber or cable through the duct.

However, blowing of the optical fiber cables in the ducts is dependent on a plurality of factors such as mass/weight of the optical fiber cables, friction, stiffness, and the like. For example, the conventional structures of sheaths of the optical fiber cables make them inefficient to allow pressurized air to blow the optical fiber cables in the pre-installed ducts as well as in the conventional optical fiber cables, drag/viscous force between the conventional structures of the sheaths of the optical fiber cables and the pre-installed ducts is less, thereby restricting the scope of blowing. Further, the conventional optical fiber cables are heavy in weight, which also restricts the scope of blowing.

One way to address the aforesaid drawbacks is providing corrugated type sheaths. In fluted core optical cables, the fluted core is made of plastic material including a plurality of ribs projecting radially from a centre portion and a plurality of grooves with each groove being disposed between two adjacent grooves. One or more optical fibers is positioned in each of the grooves.

Chinese patent application no. CN111474654B titled "Optical cable assembly" discloses an optical fiber cable having grooves with different location structure for identification of slots.

US patent application no. US10094995B2 titled "Rollable ribbons in loose-tube cable structures" discloses a cable sheath with two diagonally opposite ribs and embedded strength members.

US patent application no. US4807962A titled "Optical fiber cable having fluted strength member core" discloses an optical fiber cable that includes a fluted strength member core comprising a plurality of ribs extending radially from a center portion and a plurality of grooves, each groove being disposed between two adjacent ribs.

However, there are a number of drawbacks in the currently similar technologies employing corrugated type sheaths for optical fiber cables. The optical fiber cables disclosed in the prior arts are limited by high coefficient of friction, high stiffness as well as heavy-weight, thereby requiring high pushing force during blowing. In particular, these limitations affect the blowing performance of the optical fiber cable. Moreover, the conventional sheath designs have smooth surfaces that are limited by low viscous force between the sheath and air. Further, these conventional designs are responsible for the optical fiber cable sheaths being blown to shorter distances.

Accordingly, to overcome the disadvantages of the prior art, there is an urgent need for a technical solution that overcomes the above-stated limitations in the prior arts. The present invention focuses on providing a ribbed and grooved sheath for optical fibre cables having improved blowing performance.

### SUMMARY OF THE DISCLOSURE

Embodiments of the present disclosure provide an optical fiber cable comprising one or more optical transmission elements and a sheath surrounding one or more optical transmission elements. In particular, the outer surface of the sheath has a plurality of ribs and a plurality of grooves such that at least one rib has unequal rib width or at least one groove has unequal groove width.

In accordance with an embodiment of the present invention, the plurality of ribs is continuous and parallel on the outer surface.

In accordance with an embodiment of the present invention, the plurality of ribs is discontinuous.

According to the first aspect, a rib width is measured at the bottom and is greater than or equal to 0.15mm.

In accordance with an embodiment of the present invention, a groove width is measured at the top and is greater than or equal to 0.15mm.

In accordance with an embodiment of the present invention, a rib height is greater than or equal to 0.15mm, is measured radially.

According to a second aspect of the present disclosure, the ratio of the width of the largest rib to the width of the smallest rib is 1.2 or more.

In accordance with an embodiment of the present invention, the ratio of the width of the largest sized groove to the width of the smallest sized groove is 1.2 or more.

According to the third aspect of the present disclosure, the optical fiber cable is capable of being blown to a distance of at least 500m in a duct with an average speed of at least 40 meters per minute blown with an air pressure of less than 15 bar with a duct fill ratio of 35% to 65%.

In accordance with an embodiment of the present invention, the sheath has a thickness of 1.5mm to 3mm including a rib height.

According to the fourth aspect of the present disclosure, an optical fiber cable comprises one or more optical transmission elements and a sheath surrounding one or more optical transmission elements. In particular, the outer surface of the sheath has a plurality of ribs and a plurality of grooves such that at least one rib has unequal rib width or at least one groove has unequal groove width.

In accordance with an embodiment of the present invention, an outer surface of the sheath has a plurality of ribs and a plurality of grooves such that at least one groove has unequal groove width.

In accordance with an embodiment of the present invention, an outer surface of the sheath has a plurality of ribs and a plurality of grooves such that at least one rib has unequal rib width.

The foregoing solution of the present invention are attained by employing a ribbed and grooved sheath for optical fibre cables having improved blowing performance.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating an optical fiber cable having semi-circular protrusions (ribs) on a sheath in accordance with an embodiment of the present invention;
Fig. 2 is a pictorial snapshot illustrating a sheath of the optical fiber cable in accordance with an embodiment of the present invention;
Fig. 3 is a pictorial snapshot illustrating an alternative sheath for an optical fiber cable in accordance with an embodiment of the present invention;
Fig. 4 is a pictorial snapshot illustrating a triangular-shaped sheath for an optical fiber cable in accordance with an embodiment of the present invention;
Fig. 5 is a pictorial snapshot illustrating a flower-shaped sheath for an optical fiber cable in accordance with an embodiment of the present invention;
Fig. 6 is a pictorial snapshot illustrating a top view of a sheath depicting suppressed regions (dimples) in the sheath in accordance with an embodiment of the present invention;
Fig. 7 is a pictorial snapshot illustrating an exemplary optical fiber cable having rectangular protrusions (ribs) on a sheath in accordance with an embodiment of the present invention;
Fig. 8 is a pictorial snapshot illustrating the sheath in accordance with an embodiment of the present invention;
Fig. 9 is a pictorial snapshot illustrating an exemplary design of a sheath of an optical fiber cable having continuous axial ribs in accordance with an embodiment of the present invention;
Fig. 10 is a pictorial snapshot illustrating an exemplary design of a sheath of an optical fiber cable having discontinuous axial ribs in accordance with an embodiment of the present invention;
Fig. 11 is a pictorial snapshot illustrating an exemplary design of a sheath of an optical fiber cable having continuous radial ribs in accordance with an embodiment of the present invention;
Fig. 12 is a pictorial snapshot illustrating an exemplary design of a sheath of an optical fiber cable having discontinuous radial ribs in accordance with an embodiment of the present invention;
Fig. 13 is a pictorial snapshot illustrating an exemplary design of a sheath of an optical fiber cable having continuous helical ribs in accordance with an embodiment of the present invention;
Fig. 14 is a pictorial snapshot illustrating an exemplary design of a sheath of an optical fiber cable having discontinuous helical ribs in accordance with an embodiment of the present invention.

### REFERENCE LIST

Optical fiber cable - 100, 500, 700
Sheath - 102, 300, 400, 600, 702, 900, 1000, 1100, 1200, 1300, 1400
Plurality of ribs - 104, 106, 108, 304, 402, 502, 504, 704, 706, 902, 904, 1002, 1004, 1102, 1104, 1202, 1204, 1302, 1304, 1402, 1404
Plurality of grooves - 110, 112, 306, 308, 310, 404, 406, 506, 708, 906, 1006, 1106, 1206, 1306, 1406
First layer - 114, 712
One or more fiber encapsulating elements - 116, 714
One or more optical transmission elements - 118, 716
One or more strength members - 120, 302, 408, 508, 710, 908, 1108, 1208, 1308, 1408
Suppressed regions - 602, 604

The optical cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of elements or steps but not the exclusion of any other element or step or group of elements or steps.

The term "including" is used to mean "including but not limited to". "Including" and "including but not limited to" are used interchangeably.

### Following terms shall apply throughout the present disclosure:

Optical fiber refers to a medium associated with the transmission of information over long distances in the form of light pulses. The optical fiber uses light to transmit voice and data communications over long distances when encapsulated in a jacket/sheath.

ITU.T, which stands for International Telecommunication Union-Telecommunication Standardization Sector, is one of the three sectors of the ITU. The ITU is the United Nations specialized agency in the field of telecommunications and is responsible for studying technical, operating and tariff questions and issuing Recommendations on them with a view to standardizing telecommunications on a worldwide basis.

Blowing is the process of installation of an optical fiber cable into a pre-installed duct.

Sheathing is the process of squeezing a molten sheathing material through a funnel of a die as the core runs through the center.

### Crush resistance is an ability of a cable to withstand and/or recover from the effects of a compressive force

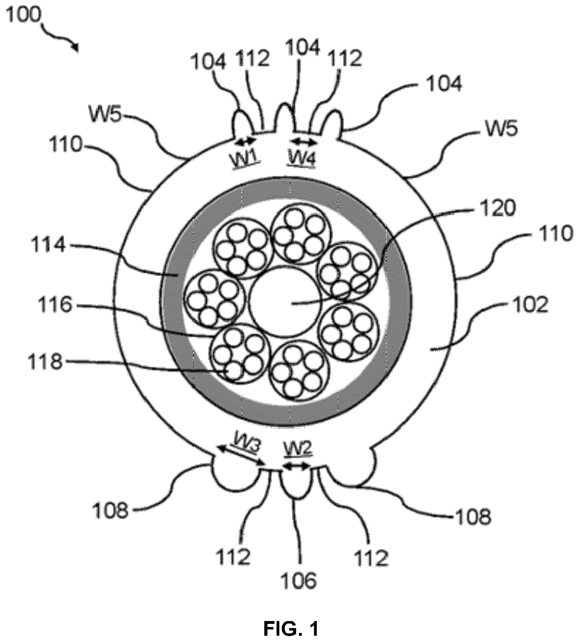

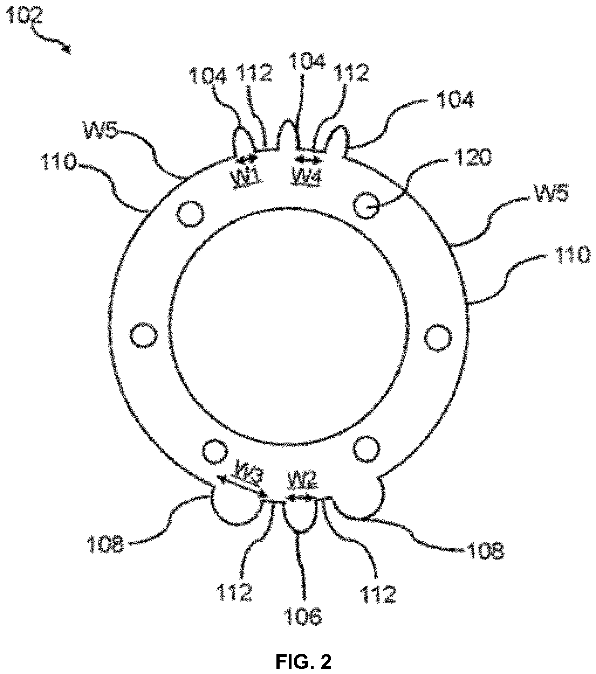

Fig. 1 and Fig.2 are snapshots illustrating an exemplary optical fiber cable 100 having semi-circular protrusions (ribs) and an exemplary sheath 102 in accordance with an embodiment of the present invention. The optical fiber cable 100 includes the sheath 102, a first layer 114, one or more fiber encapsulating elements 116 and one or more optical transmission elements 118 and one or more strength members 120. In particular, the sheath 102 is an outer layer of the optical fiber cable 100. Moreover, sheath 102 is defined by an inner surface and an outer surface. Further, the outer surface of the sheath 102 has a plurality of ribs 104, 106, 108 and a plurality of grooves 110, 112.

In accordance with an embodiment of the present invention, the plurality of ribs 104, 106, 108 and the plurality of grooves 110, 112 are formed in such a way that at least one groove has unequal groove width and/or at least one rib has unequal rib width.

In an exemplary illustration of Fig. 1 and Fig. 2, ribs 104 are small-sized ribs having a rib width W1 (smaller width), a rib 106 is a medium-sized rib having a rib width W2 (medium width) and ribs 108 are large-sized ribs having a rib width W3 (larger width). The rib width W1, the rib width W2 and the rib width W3 are different due to different sizes of the plurality of ribs 104, 106, 108.

Similarly, the plurality of grooves may have different widths. In an exemplary illustration of Fig. 1 and Fig. 2, grooves 112 are small-sized grooves having a groove width W4 (smaller width) and grooves 110 are large-sized grooves having a groove width W5 (larger width). The groove width W4 and the groove width W5 are different due to different sizes of the plurality of grooves 110, 112.

In accordance with an embodiment of the present invention, the ratio of the width of a large-sized rib (biggest rib with width W3) to the width of a small-sized rib (smallest rib with width W1) is 1.2 or more. Similarly, a ratio of the width of a large-sized groove (biggest groove with width W5) to the width of a small-sized groove (smallest groove with width W4) is 1.2 or more.

Herein, the width may be measured as a bottom width for the plurality of ribs 104, 106, 108 and a top width for the plurality of grooves 110, 112. In the case of a semi-circular shaped rib, the width may be the width of the bottom of the rib(s) which is substantially equal to the diameter of the semi-circle. Particularly, the (rib) width, measured at the bottom, of each of the plurality of ribs 104, 106, 108 may be greater than or equal to 0.15mm as below 0.15mm tool design and manufacturing will become difficult and error tolerance will be significantly high. Further, the (groove) width is measured at the top of each of the plurality of grooves 110, 112 may be greater than or equal to 0.15mm.

In accordance with an embodiment of the present invention, the plurality of ribs 104, 106, 108 may be extruded/arranged in any order. For example, the small-sized ribs, medium-sized ribs and large-sized ribs may be extruded alternately. Moreover, the plurality of ribs 104, 106, 108 are characterized by a rib height or bottom depth. The rib height, measured radially, may be greater than or equal to 0.15mmas below 0.15mm tool design and manufacturing will become difficult and error tolerance will be significantly high.

In one aspect, the plurality of ribs 104, 106, 108 is continuous and parallel. Alternatively, the plurality of ribs 104, 106, 108 may be discontinuous and parallel. Particularly, the continuous ribs are continuous protrusion over the entire length of the sheath. For example, if a rib has a flower-shaped protrusion at one end, then the protrusion extends along the entire length of the optical fiber cable. Contrarily, the discontinuous ribs are discontinuous protrusion along the entire length of the sheath.

It may be noted that the present disclosure is not limited to the aforesaid arrangements, dimensions and designs of ribs and grooves. It is possible to extrude the sheath 102 to have various other arrangements, dimensions and designs of ribs and grooves. A non-limiting example may be one rib and/or grooves may have different widths or three ribs and/or grooves may have different widths or more number of ribs and/or grooves may have different widths or all the ribs and/or grooves may have unequal widths. The plurality of ribs may have various shapes such as, but not limited to, shapes of arc, square, rectangular, tapered, triangular, flower and at least two ribs and/or at least two grooves may have a similar shape or a different shape.

The sheath 102 is characterized by a thickness in a range of 1.5mm to 3mm including the rib heightas below 1.5mm manufacturing with embedded strength members. The sheath may not possess the required mechanical strength and beyond 3mm, the optical fiber cable 100 will become heavy, which is not suitable for blowing. The blowing is performed by injecting pressurized air in an inlet of the pre-installed duct before the optical fiber cable is pushed into the pre-installed duct, where the pressurized air flows at high speed through the pre-installed duct and along the optical fiber cable. Basically, in blowing, an optical fiber cable is carried forward by pressurized air into the pre-installed duct via hydrostatic forces and viscous forces.

In particular, the sheath 102 extruded over one or more strength members 120. Usually, sheathing (extrusion) is done at a high temperature (preferably more than 100°C). In particular, the sheathing material for the sheath may include, but not limited to, polyvinylchloride, polyethylene (such as High Density Poly Ethylene (HDPE), Medium Density Poly Ethylene, and Low Density Poly Ethylene), polyurethane, thermoplastic rubber/elastomer, thermoplastic chlorinated polyethylene or combination thereof.

One or more strength members 120 provide mechanical strength and stiffness to the optical fiber cable 100, predictable break load and excellent crush protection/resistance performance.

In accordance with an embodiment of the present invention, one or more strength members 120 may be made of, but not limited to, FRP (Fiber Reinforced Plastic), ARP (Aramid Reinforced Plastic) or any other suitable dielectric/strength material. One or more strength members 120 may have a round shape, a flat shape or any other suitable shape. Moreover, one or more strength members 120 may be coated with EAA (Ethylene Acrylic Acid) or EVA (Ethylene-Vinyl Acetate) coating for better adhesion with the sheath 102 to enhance the adhesion of one or more strength members 120 with the sheath 102.

In accordance with the alternate embodiment of the present invention, one or more strength members 120 are placed at center of the optical fiber cable100 instead of embedding in the sheath 102, thus, may be referred to as a central strength member.

In accordance with an embodiment of the present invention, the sheath 102 may surround the first layer 114. Particularly, the first layer 114 may be at least one or more layers of binders, aramid yarns, glass roving yarns, water-swellable yarns, water blocking tape, metal tape, loose tube. It may be noted the optical fiber cable 100 may contain one or more layers depending upon requirement and implementation. Non-limiting examples of one or more layers may be water blocking tape, metal tape, dielectric armouring, yarns etc. that are known to a person skilled in the art.

The first layer 114 surrounds one or more fiber encapsulating elements 116 such as but not limited to, buffer tubes, loose tubes, binders, water blocking tapes. Moreover, one or more fiber encapsulating elements 116 also contain at least one of water-swellable yarn and superabsorbent polymer (SAP) powder. Further, one or more fiber encapsulating elements 116 encapsulate one or more optical transmission elements 118. One or more optical transmission elements 118 extend in a longitudinal direction.One or more optical transmission elements (or interchangeably "optical fibers") may be present in form of, but not limited to, a group of loose optical fibers, a group (or bundle) of optical fiber ribbons or a stack of optical fiber ribbons, a group of bendable/rollable ribbons, a group of corrugated ribbons, a group of partially bonded optical fiber ribbons, a group of flat ribbons.

In accordance with an embodiment of the present invention, the optical fiber ribbon bundle with a group of a plurality of optical fiber ribbons arranged together. Particularly, the optical fiber ribbon includes a number of optical fibers arranged together using a matrix material. Multiple individual optical fiber ribbons are stacked or grouped into a bundle to form the optical fiber ribbon bundle. Further, a partially bonded optical fiber ribbon from the group of intermittently bonded optical fiber ribbons is formed by intermittently bonding the plurality of optical fibers with the matrix material that imparts a bending and rolling capability along a width of the partially bonded optical fiber ribbon. The optical fiber may be of the ITU.T G.657.A2 category. Alternatively, the optical fiber may be of ITU.T G.657.A1 or G.657.B3 or G.652.D or other suitable categories.

In accordance with an embodiment of the present invention, the optical fiber may be a bend-insensitive fiber with has less degradation in optical properties or less increment in optical attenuation during bending of the optical fiber cable. Thus, the bend-insensitive fiber further helps to maintain the optical properties during multiple winding/unwinding operations of the optical fiber cable.

In accordance with an embodiment of the present invention, the optical fibers may be coloured fiber. The optical fiber may be a single-core optical fiber, a multi-core optical fiber, a single-mode optical fiber, a multimode optical fiber or the like. in particular, the single-mode optical fiber carries only a single mode of light and the multimode optical fiber carries multiple modes of light to propagate. The multicore optical fibers comprise multiple cores as opposed to the single-core optical fiber that comprises only a single core.

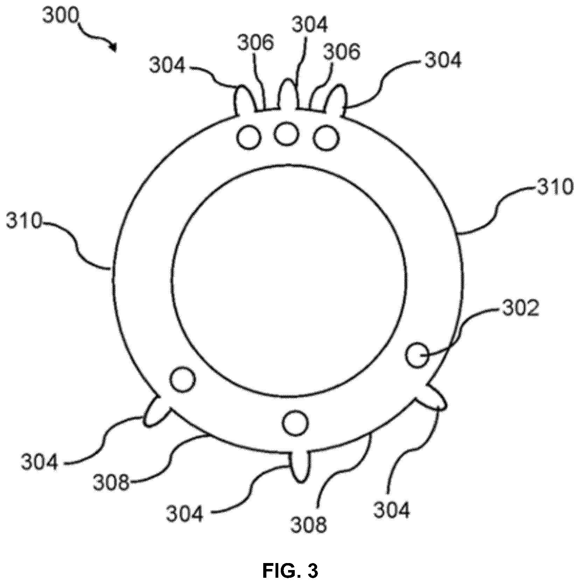

Fig. 3 is a snapshot illustrating an alternative sheath 300 for an optical fiber cable in accordance with an embodiment of the present invention. In particular, the sheath 300 comprises a plurality of ribs 304, a plurality of grooves 306, 308, 310 and one or more strength members 302 embedded in the sheath 300. Alternatively, one or more strength members 302 is a central strength member. Moreover, the plurality of ribs 304 has a semi-circular shape. Further, the plurality of ribs 304 are small-sized ribs and have the same width.

In accordance with an embodiment of the present invention, the plurality of grooves includes small-sized grooves 306, medium-sized grooves 308 and large-sized grooves 310 and may have different widths. The sheath 300 and components of the sheath 300 may have similar details/features/dimensions as explained above in conjunction with FIG. 1 and FIG. 2.

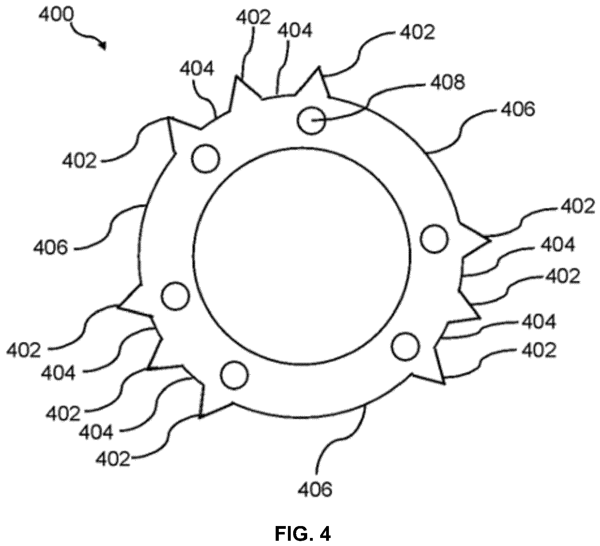

Fig. 4 is a snapshot illustrating an alternative sheath 400 for an optical fiber cable in accordance with an embodiment of the present invention. The sheath 400 may comprise a plurality of ribs 402, a plurality of grooves 404, 406 and one or more strength members 408 embedded in the sheath 400.

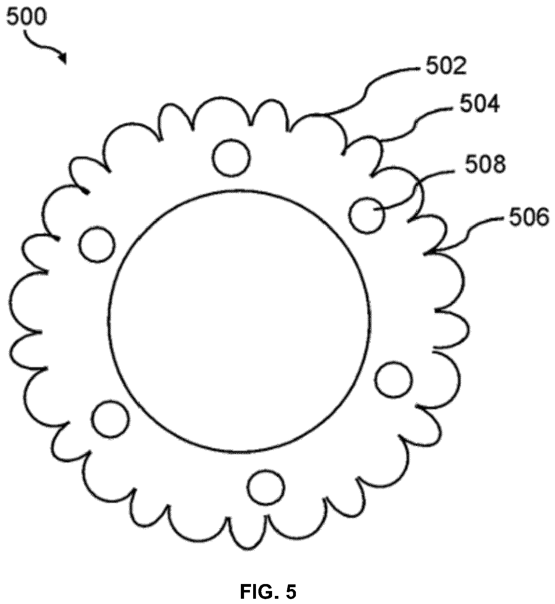

Fig. 5 is a snapshot illustrating a flower-shaped sheath for an optical fiber cable 500 in accordance with an embodiment of the present invention. The sheath 500 include a plurality of ribs 502, 504, a plurality of grooves 506 and one or more strength members 508 embedded in the sheath 500. The plurality of ribs 502, 504 is extruded in such a way that forms a flower shape. In particular, the plurality of ribs has large sized ribs 502 with larger width and small-sized ribs 504 with smaller width alternately arranged. Moreover, the plurality of grooves 506 may have the same width.

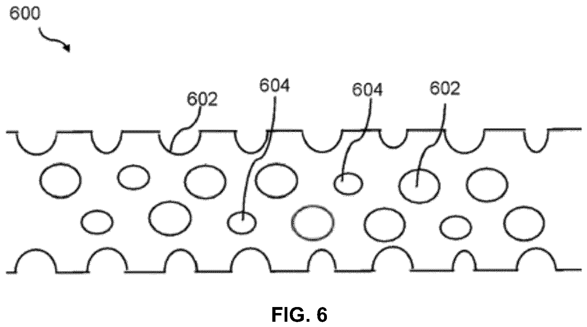

Fig. 6 is a snapshot illustrating a top view of a sheath 600 depicting suppressed regions (dimples) in the sheath in accordance with an embodiment of the present invention. In particular, the sheath 600 includes unequal sized suppressed regions 602, 604. Due to the suppressed regions, the plurality of discontinuous grooves is formed.

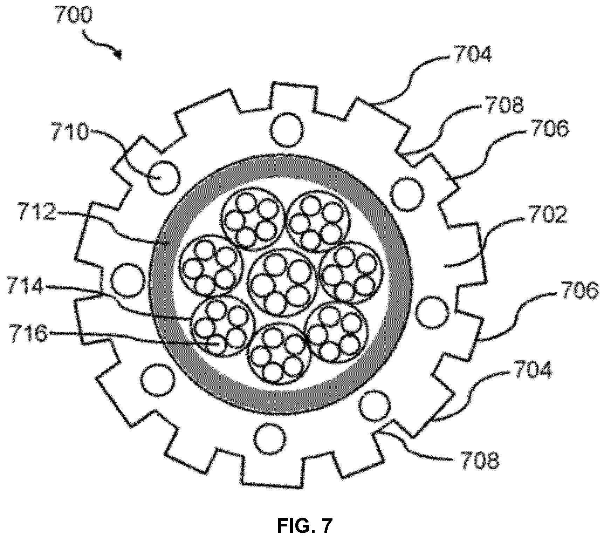

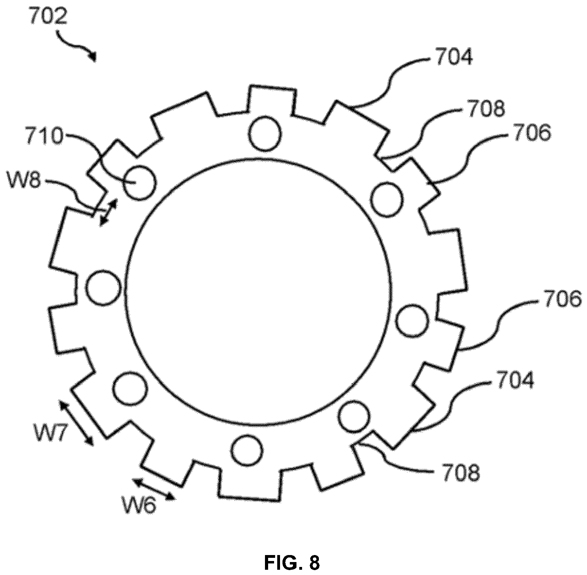

Fig. 7 and Fig. 8 are snapshots illustrating an example of optical fiber cable 700 having rectangular protrusions (ribs) and the sheath 702 in accordance with an embodiment of the present invention. The optical fiber cable 700 includes the sheath 702, a first layer 712, one or more fiber encapsulating elements 714 and one or more optical transmission elements 716 and one or more strength members 710. Particularly, sheath 702 include a plurality of ribs 704, 706 and a plurality of grooves 708 formed in such a way that at least one groove has unequal groove width and/or at least one rib has unequal rib width.

For example, ribs 706 are small-sized ribs having a rib width W6 (smaller width) and ribs 704 are large-sized ribs having a rib width W7 (larger width). The rib width W6 and the rib width W7 are different due to different sizes of the plurality of ribs 704, 706. Similarly, the plurality of grooves 708 may or may not have different widths. Herein, the plurality of grooves 708 may be defined by a groove width W8.

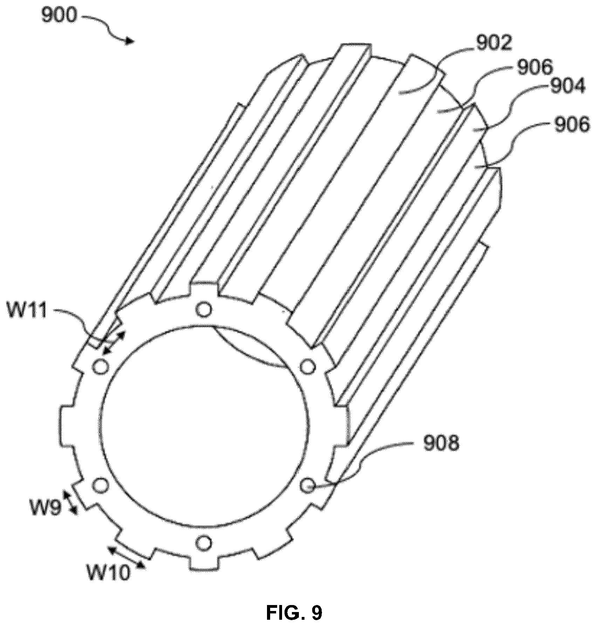

Fig. 9 is a snapshot illustrating an exemplary design of a sheath 900 of an optical fiber cable having continuous axial (longitudinal) ribs in accordance with an embodiment of the present invention. The sheath 900 may have a plurality of ribs 902, 904 and a plurality of grooves906 formed axially and one or more strength members 908. The plurality of ribs 902, 904 and the plurality of grooves 90 are formed in such a way that at least one groove has unequal groove width and/or at least one rib has unequal rib width. Ribs 904 are small sized ribs having a rib width W9 (smaller width) and ribs 902 are large sized ribs having a rib width W10 (larger width). Further, the rib width W9 and the rib width W10 are different due to different sizes of the plurality of ribs 902, 904. Similarly, the plurality of grooves 906 may or may not have different widths. Herein, the plurality of grooves 906 may be defined by a groove width W11.

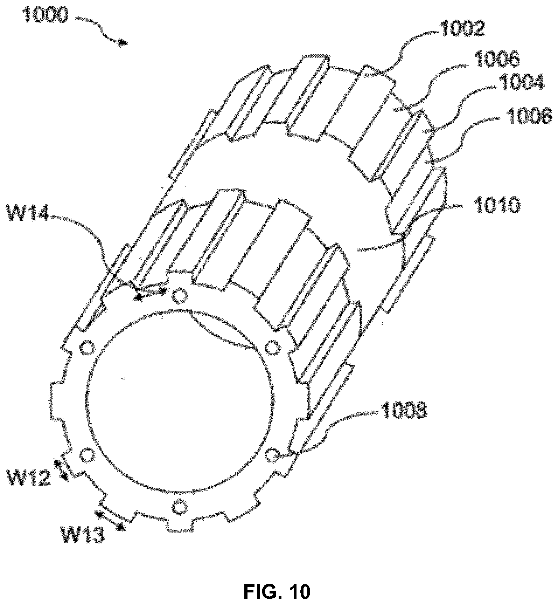

Fig. 10 is a snapshot illustrating an exemplary design of a sheath 1000 of an optical fiber cable having discontinuous axial ribs in accordance with an embodiment of the present invention. The sheath 1000 may have a plurality of ribs 1002, 1004 and a plurality of grooves 1006 formed axially and one or more strength members 1008. The plurality of ribs 1002, 1004 and the plurality of grooves 1006 are formed in such a way that at least one groove has unequal groove width and/or at least one rib has unequal rib width. Ribs 1004 are small-sized ribs having a rib width W12 (smaller width) and ribs 1002 are large sized ribs having a rib width W13 (larger width). The rib width W12 and the rib width W13 are different due to different sizes of the plurality of ribs 1002, 1004. Similarly, the plurality of grooves 1006 may or may not have different widths. Herein, the plurality of grooves 1006 may be defined by a groove width W14.

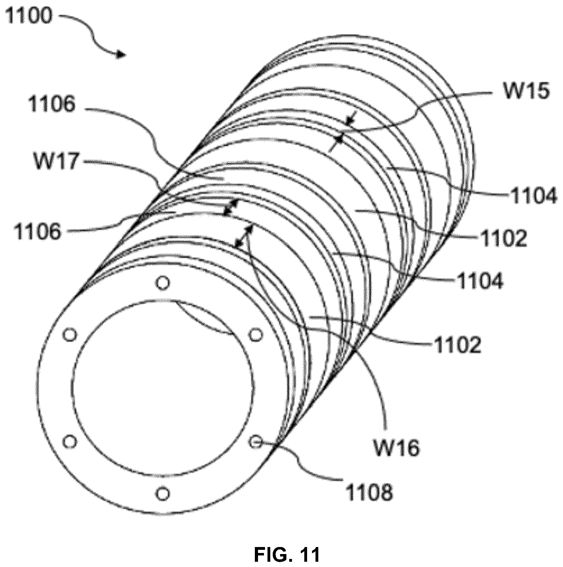

Fig. 11 is a snapshot illustrating an exemplary design of a sheath 1100 of an optical fiber cable having continuous radial ribs in accordance with an embodiment of the present invention. The sheath 1100 may have a plurality of ribs 1102, 1104 and a plurality of grooves 1106 formed radially and one or more strength members 1108. The plurality of ribs 1102, 1104 and the plurality of grooves 1106 are formed in such a way that at least one groove has unequal groove width and/or at least one rib has unequal rib width. Ribs 1104 are small-sized ribs having a rib width W15 (smaller width) and ribs 1102 are large sized ribs having a rib width W16 (larger width). The rib width W15 and the rib width W16 are different due to different sizes of the plurality of ribs 1102, 1104. Similarly, the plurality of grooves 1106 may or may not have different widths. Herein, the plurality of grooves 1106 may be defined by a groove width W17.

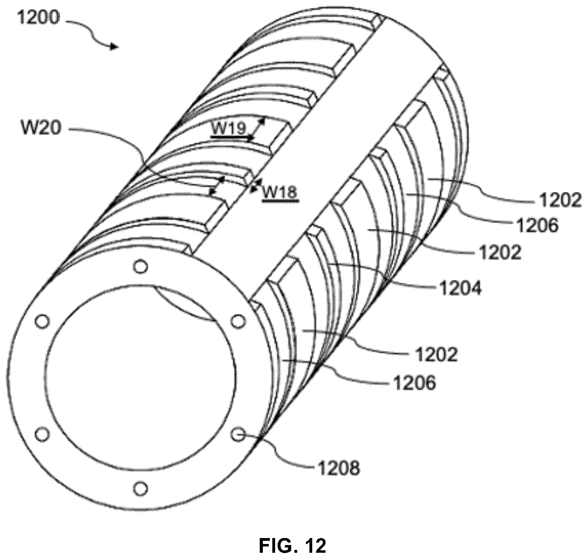

Fig 12 is a snapshot illustrating an exemplary design of a sheath 1200 of an optical fiber cable having discontinuous radial ribs in accordance with an embodiment of the present invention. The sheath 1200 may have a plurality of ribs 1202, 1204 and a plurality of grooves 1206 formed radially and one or more strength members 1208. The plurality of ribs 1202, 1204 and the plurality of grooves 1206 are formed in such a way that at least one groove has unequal groove width and/or at least one rib has unequal rib width. Ribs 1204 are small sized ribs having a rib width W18 (smaller width) and ribs 1202 are large sized ribs having a rib width W19 (larger width). The rib width W18 and the rib width W19 are different due to different sizes of the plurality of ribs 1202, 1204. Similarly, the plurality of grooves 1206 may or may not have different widths. Herein, the plurality of grooves 1206 may be defined by a groove width W20.

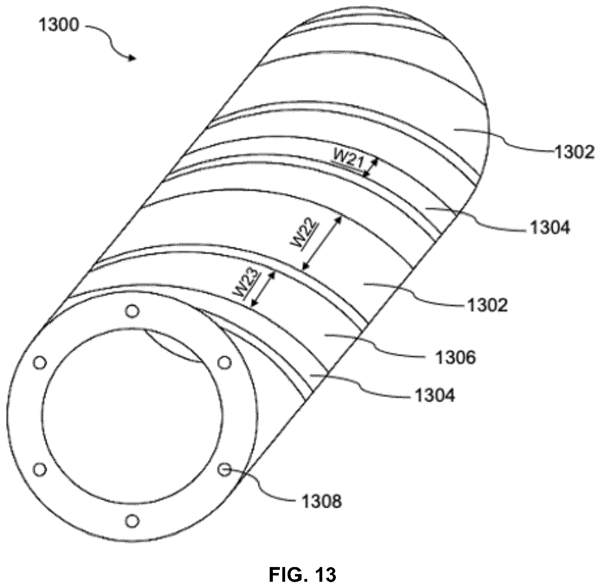

Fig. 13 is a snapshot illustrating an exemplary design of a sheath 1300 of an optical fiber cable having continuous helical ribs in accordance with an embodiment of the present invention. The sheath 1300 has a plurality of ribs 1302, 1304 and a plurality of grooves 1306 formed helically and one or more strength members 1308. The plurality of ribs 1302, 1304 and the plurality of grooves 1306 are formed in such a way that at least one groove has unequal groove width and/or at least one rib has unequal rib width. Ribs 1304 are small-sized ribs having a rib width W21 (smaller width) and ribs 1302 are large-sized ribs having a rib width W22 (larger width). The rib width W21 and the rib width W22 are different due to different sizes of the plurality of ribs 1302, 1304. Similarly, the plurality of grooves 1306 may or may not have different widths. Herein, the plurality of grooves 1306 may be defined by a groove width W23.

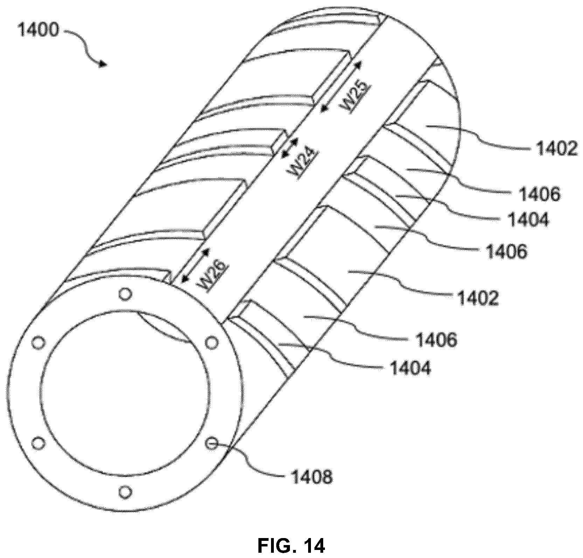

Fig. 14 is a snapshot illustrating an exemplary design of a sheath 1400 of an optical fiber cable having discontinuous helical ribs in accordance with an embodiment of the present invention. The sheath 1400 may have a plurality of ribs 1402, 1404 and a plurality of grooves 1406 formed helically and one or more strength members 1408. The plurality of ribs 1402, 1404 and the plurality of grooves 1406 are formed in such a way that at least one groove has unequal groove width and/or at least one rib has unequal rib width. Ribs 1404 are small sized ribs having a rib width W24 (smaller width) and ribs 1402 are large sized ribs having a rib width W25 (larger width). The rib width W24 and the rib width W25 are different due to different sizes of the plurality of ribs 1402, 1404. Similarly, the plurality of grooves 1406 may or may not have different widths. Herein, the plurality of grooves 1406 may be defined by a groove width W26. The ratio of the width of a large sized rib (biggest rib with width W25) to width of a small sized rib (smallest rib with width W24) maybe 1.2 or more.

In accordance with an embodiment of the present invention, the optical fiber cables proposed herein may be capable of being blown to a distance of at least 500m in a duct with an average speed of at least 40 meters per minute blown with an air pressure of less than 15 bar with a duct fill ratio of 35% to 65%. Alternatively, values of the distance, average speed, air pressure and duct fill ratio may vary.

Advantageously, the optical fiber cables with the sheaths having ribs and/or grooves along the periphery will blow better as compared to the conventional optical fiber cables having smooth sheaths. In particular, due to the ribs and grooves, the weight of the optical fiber cables is reduced, resulting in lower frictional forces and higher drag forces that will make the blowing better.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above-described embodiment, method, and examples, but by all embodiments and methods within the scope of the disclosure. It is intended that the specification and examples be considered as exemplary, with the true scope of the disclosure being indicated by the claims.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100), **characterized in that**:
one or more optical transmission elements (118); and
a sheath (102) surrounding the one or more optical transmission elements (118), wherein an outer surface of the sheath (102) has a plurality of ribs (104, 106, 108) and a plurality of grooves (110, 112) such that at least one rib has unequal rib width or at least one groove has unequal groove width.

2. The optical fiber cable (100) as claimed in claim 1, wherein the plurality of ribs (104, 106, 108) is continuous and parallel on the outer surface.

3. The optical fiber cable (100) as claimed in claim 1, wherein the plurality of ribs (104, 106, 108) is discontinuous.

4. The optical fiber cable (100) as claimed in claim 1, wherein a rib width is measured at bottom and is greater than or equal to 0.15mm.

5. The optical fiber cable (100) as claimed in claim 1, wherein agroove width is measured at top and is greater than or equal to 0.15mm.

6. The optical fiber cable (100) as claimed in claim 1, wherein a rib height is greater than or equal to 0.15mm, is measured radially.

7. The optical fiber cable (100) as claimed in claim 1, wherein a ratio of width of a largest rib to width of a smallest rib is 1.2 or more and ratio of width of a largest sized groove to width of a smallest sized groove is 1.2 or more.

8. The optical fiber cable (100) as claimed in claim 1, wherein the optical fiber cable (100)is capable of being blown to a distance of at least 500m in a duct with an average speed of at least 40 meter per minute blown with an air pressure of less than 15 bar with a duct fill ratio of 35% to 65%.

9. The optical fiber cable (100) as claimed in claim 1, wherein the sheath (102) has a thickness of 1.5mm to 3mm including a rib height.

10. An optical fiber cable (100), **characterized in that**:
one or more optical transmission elements (118); and
a sheath (102) surrounding the one or more optical transmission elements (118), wherein an outer surface of the sheath (102) has a plurality of ribs (104, 106, 108) and a plurality of grooves (110, 112) such that at least one rib has unequal rib width or at least one groove has unequal groove width.

11. The optical fiber cable (100) as claimed in claim 10, wherein an outer surface of the sheath (102) has a plurality of ribs (104, 106, 108) and a plurality of grooves (110, 112) such that at least one groove has unequal groove width.

12. The optical fiber cable (100) as claimed in claim 10, wherein an outer surface of the sheath (102) has a plurality of ribs (104, 106, 108) and a plurality of grooves (110, 112) such that at least one rib has unequal rib width.

13. The optical fiber cable (100) as claimed in claim 10, wherein the optical fiber cable (100) is capable of being blown to a distance of at least 500m in a duct with an average speed of at least 40 meter per minute blown with an air pressure of less than 15 bar with a duct fill ratio of 35% to 65%.

14. The optical fiber cable (100) as claimed in claim 10, wherein the plurality of ribs (104, 106, 108) is continuous and parallel on the outer surface.

15. The optical fiber cable (100) as claimed in claim 10, wherein a ratio of width of a largest rib to width of a smallest rib is 1.2 or more and ratio of width of a largest sized groove to width of a smallest sized groove is 1.2 or more.
